(19) Europäisches Patentamt
European Patent Office
Office européen des brevets

(11) **EP 2 196 706 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(51) Int Cl.:
*F16H 61/68* (2006.01)     *F16H 59/68* (2006.01)
*F16H 59/70* (2006.01)

(21) Anmeldenummer: **10001937.1**

(22) Anmeldetag: **16.07.2007**

(54) **Verfahren und Vorrichtung zum Steuern eines Doppelkupplungsgetriebes**

Method and device for controlling a double-clutch gearbox

Dispositif et procédé de commande d'une transmission à double embrayages

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.08.2006 DE 102006037139**

(43) Veröffentlichungstag der Anmeldung:
**16.06.2010 Patentblatt 2010/24**

(62) Dokumentnummer(n) der früheren Anmeldung(en) nach Art. 76 EPÜ:
**07013868.0 / 1 887 261**

(73) Patentinhaber: **Schaeffler Technologies GmbH & Co. KG**
**91074 Herzogenaurach (DE)**

(72) Erfinder:
• **Preisner, Marian**
**77815 Bühl (DE)**
• **Benz, Jürgen**
**77704 Oberkirch (DE)**

(56) Entgegenhaltungen:
**EP-A- 1 122 116     EP-A- 1 439 087**
**EP-A2- 0 857 895     WO-A-2005/098269**

## EP 2 196 706 B1

**Beschreibung**

Die Erfindung betrifft ein Verfahren und eine Vorrichtung zum Steuern eines Doppelkupplungsgetriebes.

Doppelkupplungsgetriebe bzw. Parallelschaltgetriebe sind, weil sie den Wirkungsgrad herkömmlicher Handschaltgetriebe haben, jedoch ohne Unterbrechung der Zugkraft automatisch geschaltet werden können, von zunehmendem Interesse. Ein Doppelkupplungsgetriebe, wie es in Figur 5 dargestellt ist, ist beispielsweise aus der EP 1 122 116 A2 bekannt.

Bei einem solchen Doppelkupplungsgetriebe ist die Kurbelwelle 10 einer nicht dargestellten Brennkraftmaschine über eine erste Kupplung K1 mit einer Eingangswelle 12 eines ersten Teilgetriebes eines insgesamt mit 14 bezeichneten Doppelkupplungsgetriebes verbindbar. Mittels einer zweiten Kupplung K2 ist eine Eingangswelle 16 eines zweiten Teilgetriebes des Doppelkupplungsgetriebes 14 drehfest mit der Kurbelwelle 10 verbindbar. Die Kupplungen K1 und K2 weisen beispielsweise ein gemeinsames, von der Kurbelwelle 10 drehangetriebenes Gehäuse auf. Mit den jeweiligen Eingangswellen drehfest verbundene Kupplungsscheiben sind getrennt voneinander betätigbar und in reibschlüssigem Eingriff mit entsprechenden gehäusefesten Gegenflächen bringbar. Die Eingangswelle 12 ist durch die hohl ausgeführte Eingangswelle 16 hindurchgeführt.

Die Eingangswellen sind über entsprechende Radpaarungen mit einer Abtriebswelle 18 drehbar oder drehfest verbunden. Ein Rad jeder Radpaarung ist mit einer der Wellen, wie dargestellt, jeweils drehfest verbunden. Das jeweils andere Rad des Radpaares ist auf der jeweiligen Welle drehbar gelagert und kann mittels Einrückgliedern 20a, 20b und 20c in drehfesten Eingriff mit der jeweiligen Welle gebracht werden. Die senkrecht über den jeweiligen Radpaarungen eingetragenen Ziffern bedeuten einen jeweiligen Gang. Wenn beispielsweise die Kupplung K2 geschlossen ist und die Kupplung K1 offen ist und das auf der Eingangswelle 16 drehbar gelagerte, unter der Ziffer 1 befindliche Rad mittels des Einrückgliedes 20a drehfest mit der Eingangswelle 16 verbunden ist, ist in dem Doppelkupplungsgetriebe 14 der erste Gang geschaltet. Es versteht sich, dass dann die Eingangswelle 16 über keine weitere Radpaarung drehfest mit der Abtriebswelle 18 verbunden sein darf. Bei offener Kupplung K1 kann jeweils eine der der Eingangswelle 12 zugeordneten Radpaarungen eingelegt werden, d.h. einen drehfesten Eingriff zwischen der Eingangswelle 12 und der Abtriebswelle 18 vermitteln. Durch bloßes Öffnen der Kupplung K2 und damit überschneidendes Schließen der Kupplung K1 kann Zugkraft unterbrechungsfrei von dem der Eingangswelle 16 zugeordneten Teilgetriebe 22 auf das der Eingangswelle 12 zugeordnete Teilgetriebe 24 umgeschaltet werden. Bei geschlossener Kupplung K2 kann mit den Gängen I, III und V des Teilgetriebes 22 gefahren werden. Bei geschlossener Kupplung K1 kann mit den Gängen II, IV und VI des Teilgetriebes 24 gefahren werden. Ein Rückwärtsgang ist nicht dargestellt.

Die Kupplungen K1 bzw. K2 werden von Aktoren 26 bzw. 28 betätigt. Die Einrückglieder 20a, 20b und 20c zum Einlegen und Auslegen von Gängen bzw. zur drehfesten Verbindung eines jeweiligen Rades mit der zugehörigen Welle werden von einer Gangbetätigungseinrichtung 30 betätigt, die beispielsweise einen Wähl- und einen Schaltaktor aufweisen kann, mit dem eine oder mehrere Schaltfinger mit entsprechenden Einrückgliedern in Eingriff gebracht werden.

Zur Steuerung der Kupplungsaktoren 26 und 28 und des oder der in der Gangbetätigungseinrichtung 30 enthaltenen Aktoren dient eine elektronische Steuereinrichtung 32, deren Eingänge 34 mit Sensoren verbunden sind, beispielsweise Drehzahlsensoren, Stellungssensoren usw., die für den Ablauf von in der Steuereinrichtung 32 enthaltenen Steuerprogrammen erforderliche Signale liefern.

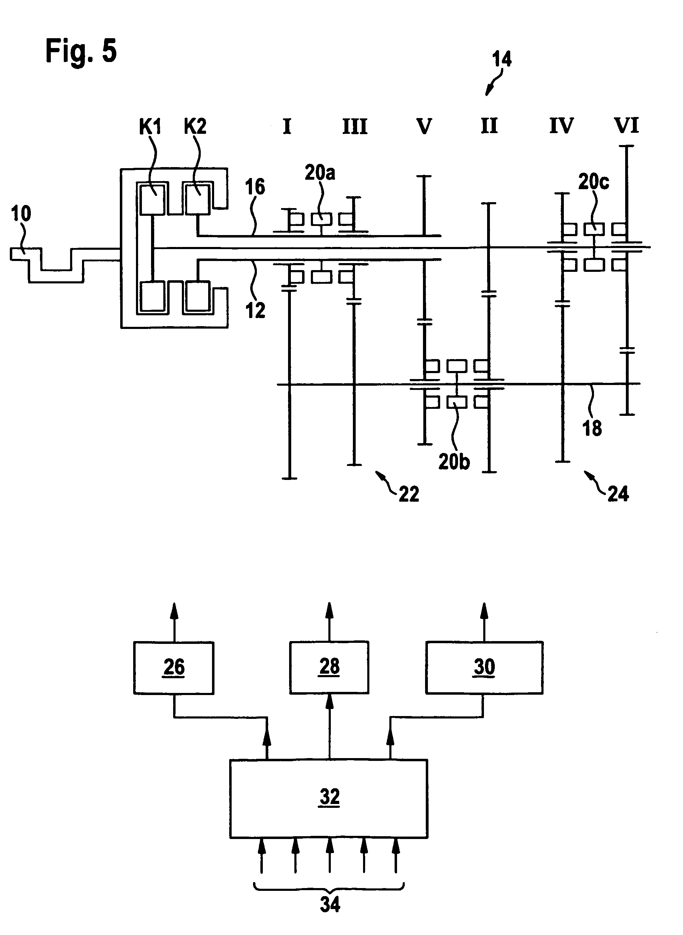

Aufbau und Funktion des in Figur 5 beschriebenen Systems sind an sich bekannt und werden daher nicht im Einzelnen erläutert.

Für die Betätigung der Kupplungen K1 und K2 zum Umschalten des Getriebes von einem in einem der Teilgetriebe eingelegten und wirksamen "alten" Gang auf einen im anderen Teilgetriebe eingelegten und zu schaltendem "neuen" Gang gibt es unterschiedliche Strategien. Beispielsweise kann die zunächst geschlossene "alte" Kupplung für einen Schaltvorgang mit Schlupfregelung betrieben werden und die "neue" Kupplung rampenförmig und zunächst gesteuert geschlossen werden. Der "neue" Gang übernimmt dann immer mehr Motormoment. In Folge der Schlupfregelung öffnet die "alte" Kupplung entsprechend. Wenn der "neue" Gang das volle Motormoment erreicht hat, ist die Kupplung des "alten" Ganges vollständig geöffnet, so dass der "alte" Gang ausgelegt werden kann. Das Drehzahlniveau des Motors muss zur Vermeidung eines Momentensprungs auf das Niveau des "neuen" Gangs gesenkt werden.

Eine andere Strategie, die steuerungs- bzw. regelungstechnisch einfacher realisierbar ist, besteht darin, die "alte" Kupplung voll zu schließen, d.h. schlupffrei zu betreiben, und das dem "alten" Gang zugeordnete Einrückglied mit einer Kraft in Richtung des Ausrückens des Gangs von der Gangbetätigungseinrichtung 30 her zu belasten. Die dem zu schaltenden "neuen" Gang zugeordnete, zunächst offene Kupplung wird rampenförmig geschlossen und übernimmt dabei zunehmend das vom Antriebsmotor bzw. Kurbelwelle 10 auf die Abtriebswelle 18 übertragene Drehmoment. Sobald dieses Drehmoment vollständig von der "neuen" Kupplung übernommen ist, ist die über den "alten" Gang erfolgende Drehmomentübertragung drehmomentfrei, so dass das "alte" Gangrad in Folge der Vorspannung in Ausrückrichtung ausgelegt wird, sich das "alte" Teilgetriebe somit im Nullgang befindet, in dem die "alte" Kupplung ohne Einfluss auf den Antriebsstrang geöffnet werden kann.

Der Erfindung liegt die Aufgabe zugrunde, das vorgenannte Verfahren zur Steuerung der Kupplungen bei einem Gangwechsel zu verbessern, insbesondere eine Möglichkeit anzugeben, das Auslegen des "alten" Ganges, das für die weitere Steuerung des Doppelkupplungsgetriebes maßgeblich ist, genau festzustellen.

Eine Lösung der Erfindungsaufgabe wird mit einem Verfahren zum Steuern eines Doppelkupplungsgetriebes erzielt, welches zwei mit je einer Kupplung versehene Teilgetriebe zur wahlweisen drehmomentübertragenden Verbindung einer Antriebswelle mit einer Abtriebswelle aufweist, wobei in den Teilgetrieben bei offener zugehöriger Kupplung Gänge einlegbar sind, so dass die Übersetzung des Doppelkupplungsgetriebes lediglich durch Schließen der einen Kupplung und Öffnen der jeweils anderen Kupplung von einem in dem einen Teilgetriebe eingelegten Gang auf einen in dem anderen Teilgetriebe eingelegten Gang schaltbar ist, welches Verfahren folgende Schritte enthält:

-    Vorspannen des geschalteten Gangs in Richtung seines Auslegens,
-    rampenförmiges Schließen der dem neu zu schaltenden Gang zugeordneten Kupplung, und
-    Auslegen des bisher geschalteten Gangs bei zumindest weitgehender Momentenfreiheit der dem bisher geschalteten Gang zugeordneten Kupplung, wobei das Auslegen des bisher geschalteten Gangs dadurch erkannt wird, dass der Betrag folgender Differenz einen vorbestimmten Wert übersteigt:

$$n_1 - \frac{n_2}{i_2} i_1 \, ,$$

wobei

$n_1$:    Drehzahl der Eingangswelle des Teilgetriebes, dessen Gang bisher geschaltet war;
$i_1$:    Übersetzung des bisher geschalteten Gangs;
$n_2$:    Drehzahl der Eingangswelle des Teilgetriebes, dessen Gang neu geschaltet wird;
$i_2$:    Übersetzung des neu zu schaltenden Gangs.

Vorteilhafterweise wird das von der rampenförmig schließenden Kupplung übertragbare Moment bei einer Zug-Hochschaltung auf einen vom Motormoment und den in den Teilgetrieben eingelegten Gängen abhängigen Wert begrenzt. Bei einer weiteren vorteilhaften Durchführungsform des Verfahrens wird das Moment der schließenden Kupplung zum Zeitpunkt des Auslegens des bisher geschalteten Gangs auf den Wert

$$T_{K2} = T_M - I_M \dot{\omega}_M$$

adaptiert, wobei
$T_M$ = an dem Doppelkupplungsgetriebe wirksames Motormoment,
$I_M$ = Trägheitsmoment des Motors,
$\dot{\omega}$ = Drehzahländerung des Motors zum Zeitpunkt des Auslegens des bisher geschalteten Ganges.

Bei den erfindungsgemäßen Verfahren ist es nicht zwingend erforderlich, die "alte" Kupplung völlig schlupffrei zu betreiben. Vorteilhaft und steuerungstechnisch einfach ist jedoch, die dem bisher eingelegten bzw. "alten" Gang zugeordneten Kupplung bis zum Auslegen des Ganges zumindest weitgehend schlupffrei zu schließen.

Die Erfindungsaufgabe wird weiter mit einer Vorrichtung zum Steuern eines Doppelkupplungsgetriebes gelöst, welches zwei mit je einer Kupplung versehene Teilgetriebe zur wahlweisen drehmomentübertragenden Verbindung einer Antriebswelle mit einer Abtriebswelle aufweist, wobei in den Teilgetrieben bei offener zugehöriger Kupplung Gänge einlegbar sind, so dass die Übersetzung des Doppelkupplungsgetriebes lediglich durch Schließen der einen Kupplung und Öffnen der jeweils anderen Kupplung von einem in dem einen Teilgetriebe eingelegten Gang auf einen in dem anderen Teilgetriebe eingelegten Gang schaltbar ist, welche Vorrichtung folgende Schritte enthält:

-    je einen Kupplungsaktor zur Betätigung je einer der Kupplungen,
-    eine Gangbetätigungseinrichtung mit wenigstens einem Gangaktor zum Einlegen und Auslegen von Gängen,
-    Sensoren zum Erfassen von für den Betrieb der Aktoren relevanten Größen und
-    eine elektronische Steuereinrichtung, die den Betrieb der Aktoren entsprechend einem der vorgenannten Verfahren steuert.

Die Erfindung, die nicht auf Doppelkupplungsgetriebe mit dem Aufbau gemäß Figur 5 beschränkt ist, wird im Folgenden anhand schematischer Zeichnungen beispielsweise und mit weiteren Einzelheiten erläutert.

In den Figuren stellen dar:

Figur 1    Kurven zur Erläuterung einer Möglichkeit zur Erkennung des Auslegens eines Ganges (stellt nicht Teil der Erfindung dar)

Figur 2    ein Blockschaltbild eines Doppelkupplungsgetriebes zur Erläuterung einer Mög- lichkeit, das Auslegen eines Ganges direkt zu erkennen,

Figur 3    Kurven zur Erläuterung einer vorteilhaften Möglichkeit, die "neue" Kupplung zu steuern,

Figur 4    ein der Figur 2 ähnliches Blockschaltbild eines Doppelkupplungsgetriebes und

Figur 5    den bereits erläuterten Aufbau eines an sich bekannten Doppelkupplungsge- triebes mit dessen Steuereinrichtung.

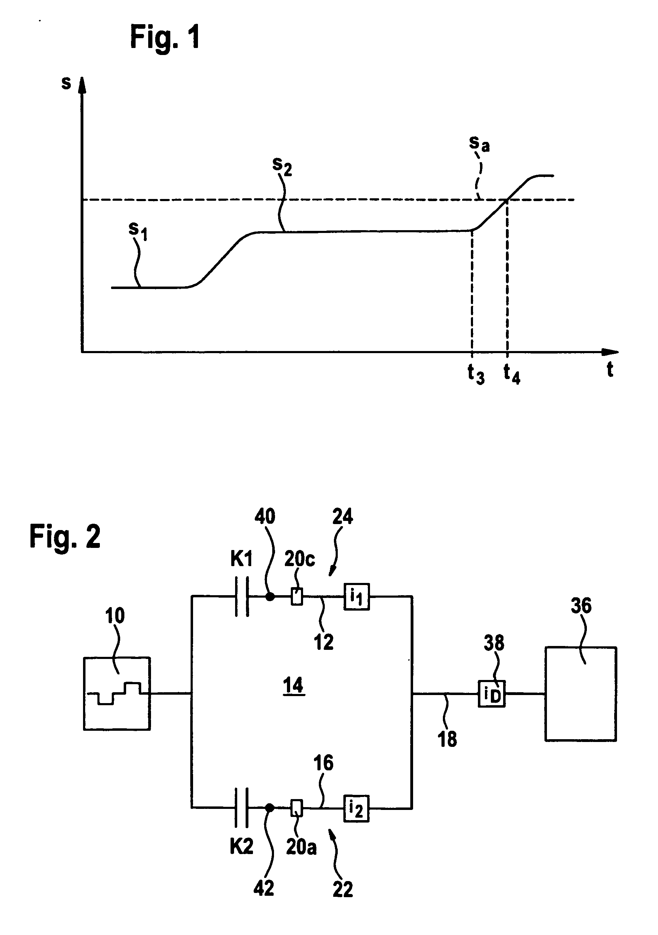

In Figur 1 stellt die Ordinate s die Position eines Einrückgliedes 20 (Figur 5) bzw. eines mit dem Einrückglied 20 hinsichtlich dessen Ausrückweg starr verbundenen Bauteils dar, wobei das Einrückglied über einen in der Gangbetätigungseinrichtung 30 enthaltenen Aktor mit einer - Kraft in Ausrückrichtung vorgespannt ist. Die Abszisse stellt die Zeit t dar. Die durchgehend eingezeichnete Linie stellt den Positionsverlauf des Einrückgliedes dar. Vor Beginn einer Schaltung wird das Einrückglied mit der Vorspannkraft in Ausrückrichtung belastet, so dass es sich von der Position $s_1$ zur Position $s_2$ bewegt, die es einnimmt, solange der eingelegte Gang Drehmoment überträgt. Mit zunehmendem Schließen der "neuen" Kupplung nimmt die Drehmomentübertragung über die "alte" Kupplung bzw. den "alten" Gang ab, bis das Einrückglied zum Zeitpunkt $t_3$ beginnt, sich in Ausrückrichtung zu bewegen und zum Zeitpunkt $t_4$ die Position $S_a$ erreicht, die der Position entspricht, in der der "alte" Gang ausgerückt ist, d.h. sich das zugehörige Teilgetriebe im Nullgang befindet. Das Erreichen der Position $S_a$ wird beispielsweise mittels eines Inkrementsensors festgestellt, der die Bewegung des zugehörigen Aktors erfasst und in geeigneten Betriebspunkten, beispielsweise bei eingelegtem Nullgang oder bei Erreichen eines Anschlags nach Einlegen eines Ganges, aktualisiert wird. Dabei kann das Erreichen der Position $S_a$ durch Auswerten der Stellung des Aktors und/oder der Geschwindigkeit des Aktors bzw. eines von diesem betätigten Bauteils erkannt werden. Bei den zu Figur 1 gemachten Ausführungen handelt es sich nicht um einen Teil der Erfindung.

Anhand der Figur 2 wird im Folgenden eine Möglichkeit erläutert, das Auslegen eines Ganges direkt zu erkennen.

Sei angenommen, die Kupplung K1 sei geschlossen, d.h. im Teilgetriebe 24 ist ein Gang geschaltet, der die Übersetzung $i_1$ hat.

Sei weiter angenommen, die Kupplung K2 sei geöffnet und im Teilgetriebe 22 ist ein Gang eingelegt, der die Übersetzung $i_2$ hat. Die Abtriebswelle 18 des Doppelkupplungsgetriebes 14 ist mit einem angetriebenen Rad 36 des Fahrzeugs über ein Differential 38 verbunden, das die Übersetzung $i_D$ hat. Mit 40 ist ein Drehzahlsensor zum Erfassen der Drehzahl der Eingangswelle 12 des Teilgetriebes 24 bezeichnet. 42 bezeichnet einen Drehzahlsensor zum Erfassen der Drehzahl der Eingangswelle 16 des Teilgetriebes 22. 20a und 20c bezeichnen Einrückglieder bzw. Schiebemuffen zum Ein- und Ausrücken der jeweiligen Gänge.

Wie aus Figur 2 unmittelbar ersichtlich, gilt für die Drehzahl des vom Einrückglied 20 (Schiebemuffe) des Teilgetriebes 24 betätigten Gangrades die Beziehung:

$$n_1 = (n_2 / i_2) * i_1,$$

wobei
$n_2$ die Drehzahl der der Kupplung K2 zugeordneten Eingangswelle 16 ist und beide Kupplungen geschlossen sind und das Teilgetriebe 24 ausgerückt ist.

Wenn $n_1$ die Drehzahl der Eingangswelle des Teilgetriebes 24 ist, beträgt die Drehzahldifferenz zwischen dem auf der Eingangswelle 12 gelagerten Gangrades und der Eingangswelle: Somit gilt bei eingelegtem Gang M Teilgetriebe 24 ("altes" Getriebe):

$$\Delta n = n_1 - (n_2 / i_2) * i_1.$$

Sobald der Gang im Teilgetriebe 24 ausgelegt ist, nimmt $\Delta n$ auf diesen Wert zu, so dass, sobald $\Delta n$ einen vorbestimmten Grenzwert übersteigt, dies direkt als Auslegen des "alten" Gangs im Teilgetriebe 24 gewertet wird.

Es versteht sich, dass die vorgenannten Überlegungen in gleicher Weise gelten, wenn im Teilgetriebe 22 ein Gang ausgelegt wird und das Teilgetriebe 24 durch schließende Kupplung K1 wirksam wird.

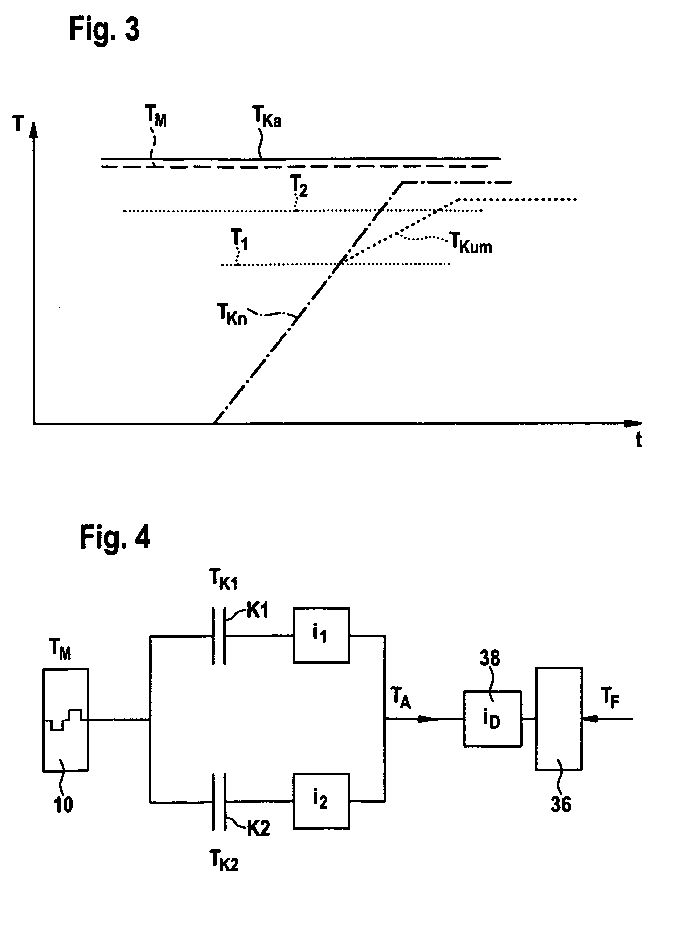

Anhand der Figur 3 wird im Folgenden ein vorteilhaftes Verfahren zum Schließen der "neuen" Kupplung erläutert, wobei die Abszisse die Zeit t darstellt und die Ordinate Momente T angibt.

Die gestrichelte Kurve $T_M$ gibt das Motormoment an, das von der Kurbelwelle her auf das Doppelkupplungsgetriebe wirkt. Die durchgehend gezogene Linie $T_{Ka}$ gibt das von der "alten" Kupplung übertragbare Moment an, das zumindest bis zum Auslegen des "alten" Ganges konstant gehalten wird. Die strichpunktierte Kurve $T_{Kn}$ gibt das von der "neuen" Kupplung übertragbare Moment an. Die mit quadratischen Punkten angegebene Kurve $T_{Knm}$ gibt das erfindungsgemäße modifizierte übertragbare Moment der "neuen" Kupplung an.

Wie aus der Figur ersichtlich, wird die "neue" Kupplung rampenartig mit einem bestimmten Gradienten geschlossen, bis der in Auslegrichtung vorgespannte Gang herausfällt, was erfolgt, wenn die "neue" Kupplung ein Drehmoment $T_2$ erreicht.

Je flacher der Gradient ist, mit dem die "neue" Kupplung geschlossen wird, desto größer ist die Genauigkeit, mit der das Moment $T_2$, bei dem der Gang ausgelegt wird, getroffen wird, bzw. umso länger ist die Zeitdauer, die für ein Auslegen zur Verfügung steht, bei dem die "alte" Kupplung bzw. der "alte" Gang kein oder nur ein geringes Moment überträgt.

Erfindungsgemäß wird ab einem bestimmten Prozentsatz des Moments $T_2$, bei dem mit dem Auslegen des vorgespannten "alten" Gangs gerechnet wird, der Gradient der "neuen" Kupplung flacher werden, wie durch die Kurve $T_{Knm}$ angedeutet. Der Prozentsatz, um den das Moment $T_1$, bei dem der Gradient flacher wird, unter dem Moment $T_2$ liegt, richtet sich nach der Genauigkeit des Kupplungsmoments. Je genauer das Kupplungsmoment bekannt ist, desto niedriger ist der Prozentsatz und desto näher am Motormoment $T_M$ kann flacher "gerampt" werden. Ein flacherer Kupplungsgradient macht allerdings nur solange Sinn, bis das Motormoment erreicht ist. Sollte bis dahin der Gang nicht herausgefallen bzw. ausgelegt sein, ist dies ein Indiz dafür, dass die "neue" Kupplung weniger Moment überträgt als von der Steuereinrichtung 32 (Figur 5) angenommen. Entsprechend kann bzw. muss das Kupplungsmoment wieder steiler gewählt werden.

Der mit dem geschilderten Verfahren verbundene Nachteil einer längeren Überschneidungsschaltung ist dem erzielten Komfortgewinn gegenüberzustellen.

Anhand der Figur 4 wird im Folgenden ein weiteres vorteilhaftes erfindungsgemäßes Verfahren erläutert:

Die Bezugszeichen sind wie in Figur 2, wobei zusätzlich jeweils wirksame Momente angegeben sind. $T_M$ bedeutet das Motormoment, $T_{K1}$ sowie $T_{K2}$ bedeutet das von der jeweiligen Kupplung übertragene Moment. $T_A$ bedeutet das an der Abtriebswelle wirksame Moment. $T_F$ bedeutet das von außen her wirksame Fahrzeugmoment.

Im Gegensatz zu einer Eingangs geschilderten Überschneidungsstrategie, bei der beide Kupplungen K1 und K2 während einer Schaltung mit gleichem Schlupfvorzeichen schlupfen und somit Momente in die gleiche Richtung übertragen, ist bei einer Schaltung ohne Schlupf immer die "alte" (öffnende) Kupplung mit Überanpressung geschlossen, so dass sie nicht schlupft. Bei Zug-Hochschaltungen kann es dadurch vorkommen, dass bei genügend großem Moment $T_{K2}$ (K2 ist die "neue" Kupplung) der "neuen" Kupplung die "alte" Kupplung anfängt, ein negatives Moment zu übertragen. Wird dieses negative Moment hinter der Übersetzung größer als das von der "neuen" Kupplung übertragene Moment, so wird auch das gesamte Abtriebsmoment $T_A$ gemäß Figur 4 negativ. Eine Schub-Rückschaltung ist in einer solchen Situation unkritisch, da dabei kein Vorzeichenwechsel des Abtriebsmoments $T_A$ vorkommt.

Folgende Formeln beschreiben den Sachverhalt:

$$T_{K1} \cdot i_1 + T_{K2} \cdot i_2 = T_A \qquad \text{Formel 1}$$

Bei geschlossener Kupplung K1 gilt:

$$T_{K1} = T_M - J_M \dot{\omega}_M - T_{K2}, \qquad \text{Formel 2}$$

wobei $J_M$ das Trägheitsmoment und $\dot{\omega}_M$ die Drehzahländerung des Antriebsmotors (Kurbelwelle 10) ist.

Wird nun ein sicherheitskritischer Wert für das Abtriebsmoment $T_{A,S}$ angenommen, dann kann der Grenzwert für das Moment an der Kupplung K2 berechnet werden:

$$T_{K2} = (T_M - J_M \dot{\omega}_M) \frac{i_1}{i_1 - i_2} - T_{A,S} \frac{1}{i_1 - i_2}$$

Formel 3

Wenn in der Formel 3 zusätzlich noch ein Fehler des Motormoments $T_M$ berücksichtigt wird, kann ein maximal erlaubtes Moment der "neuen" Kupplung bei Zug-Hochschaltungen bestimmt werden, bei der das sicherheitskritische Ausgangsmoment nicht unterschritten wird.

Erfindungsgemäß wird das maximale Moment der "neuen" Kupplung bei Zug-Hochschaltungen auf den so bestimmten Wert begrenzt.

Ein weiterer mit der Erfindung erzielter Vorteil liegt darin, dass in einfacher Weise eine Kupplungsmomentenadaption erfolgen kann, d.h. eine Aktualisierung der in der Steuereinrichtung 32 abgelegten Zuordnung zwischen der Stellung eines von einem Kupplungsaktor betätigten Betätigungsgliedes der Kupplung und dem übertragbaren Kupplungsmoment.

Da das Moment der "alten" Kupplung zum Zeitpunkt des Auslegens des alten Ganges etwa 0 beträgt, kann das Moment der "neuen" Kupplung zu diesem Zeitpunkt anhand der Formel 2 bestimmt werden zu:

$$T_{K2} = T_M - J_M \dot{\omega}_M .$$

Durch einen Abgleich mit dem aktuellen, von der Steuereinrichtung gelieferten Momentenwert kann eine Korrektur des Moments der "neuen" Kupplung vorgenommen werden.

Die vorgenannten Verfahren können einzeln und in Kombination eingesetzt werden.

## Bezugszeichenliste

| | |
|---|---|
| 10 | Kurbelwelle |
| 12 | Eingangswelle |
| 14 | Doppelkupplungsgetriebe |
| 16 | Eingangswelle |
| 18 | Abtriebswelle |
| 20 | Einrückglied |
| 22 | Teilgetriebe |
| 24 | Teilgetriebe |
| 26 | Kupplungsaktor |
| 28 | Kupplungsaktor |
| 30 | Gangbetätigungseinrichtung |
| 32 | Steuereinrichtung |
| 34 | Eingänge |
| 36 | Rad |
| 38 | Differential |
| 40 | Drehzahlsensor |
| 42 | Drehzahlsensor |

## Patentansprüche

1.   Verfahren zum Steuern eines Doppelkupplungsgetriebes, welches zwei mit je einer Kupplung (K1, K2) versehene Teilgetriebe (22, 24) zur wahlweisen drehmomentübertragenden Verbindung einer Antriebswelle (10) mit einer Abtriebswelle (18) aufweist, wobei in den Teilgetrieben bei offener zugehöriger Kupplung Gänge einlegbar sind, so dass die Übersetzung des Doppelkupplungsgetriebes lediglich durch Schließen der einen Kupplung und Öffnen der jeweils anderen Kupplung von einem in dem einen Teilgetriebe eingelegten Gang auf einen in dem anderen Teilgetriebe eingelegten Gang schaltbar ist, enthaltend folgende Schritte:

   - Vorspannen des geschalteten Gangs in Richtung eines Auslegens,

- rampenförmiges Schließen der dem neu zu schaltenden Gang zugeordneten Kupplung, und
- Auslegen des bisher geschalteten Gangs bei zumindest weitgehender Momentenfreiheit der dem bisher geschalteten Gang zugeordneten Kupplung, **dadurch gekennzeichnet, dass** das Auslegen des bisher geschalteten Gangs **dadurch** erkannt wird, dass der Betrag folgender Differenz einen vorbestimmten Wert übersteigt:
wobei

n$_1$: Drehzahl der Eingangswelle des Teilgetriebes, dessen Gang bisher geschaltet war;
i$_1$: Übersetzung des bisher geschalteten Gangs;
n$_2$: Drehzahl der Eingangswelle des Teilgetriebes, dessen Gang neu geschaltet wird;
i$_2$: Übersetzung des neu zu schaltenden Gangs.

2. Verfahren nach Anspruch 1, wobei das von der rampenförmig schließenden Kupplung übertragbare Moment bei einer Zug-Hochschaltung auf einen vom Motormoment und den in den Teilgetrieben eingelegten Gänge abhängigen Wert begrenzt wird.

3. Verfahren nach einem der Ansprüche 1 bis 2, wobei das Moment ($T_{K2}$) der schließenden Kupplung zum Zeitpunkt des Auslegens des bisher geschalteten Gangs auf den Wert

$$T_{K2} = T_M - I_M \dot{\omega}_M$$

adaptiert wird, wobei
$T_M$ = an dem Doppelkupplungsgetriebe wirksames Motormoment,
$I_M$ = Trägheitsmoment des Motors,
$\omega$ = Drehzahländerung des Motors zum Zeitpunkt des Auslegens des bisher geschalteten Ganges.

4. Verfahren nach einem der Ansprüche 1 bis 3, wobei die dem bisher eingelegten Gang zugeordnete Kupplung bis zum Auslegen des Gangs zumindest weitgehend schlupffrei geschlossen ist.

5. Vorrichtung zum Steuern eines Doppelkupplungsgetriebes, welches zwei mit je einer Kupplung (K1, K2) versehene Teilgetriebe (22, 24) zur wahlweisen drehmomentübertragenden Verbindung einer Antriebswelle (10) mit einer Abtriebswelle (18) aufweist, wobei in den Teilgetrieben bei offener zugehöriger Kupplung Gänge einlegbar sind, so dass die Übersetzung des Doppelkupplungsgetriebes lediglich durch Schließen der einen Kupplung und Öffnen der jeweils anderen Kupplung von einem in dem einen Teilgetriebe eingelegten Gang auf einen in dem anderen Teilgetriebe eingelegten Gang schaltbar ist, welche Vorrichtung enthält:

je einen Kupplungsaktor (26, 28) zur Betätigung je einer der Kupplungen (K1, K2),
eine Gangbetätigungseinrichtung (30) mit wenigstens einem Gangaktor zum Einlegen und Auslegen von Gängen,
Sensoren zum Erfassen von für den Betrieb der Aktoren relevanten Größen und eine elektronische Steuereinrichtung (32), die den Betrieb der Aktoren entsprechend einem Verfahren nach einem der Ansprüche 1 bis 4 steuert.

**Claims**

1. Method for controlling a double-clutch gearbox which has two partial gearboxes (22, 24), provided with in each case one clutch (K1, K2), for the selective torque-transmitting connection of a drive input shaft (10) to a drive output shaft (18), wherein gears can be engaged in the partial gearboxes when the associated clutch is open, in such a way that the transmission ratio of the double-clutch gearbox can be shifted from a gear engaged in one partial gearbox to a gear engaged in the other partial gearbox merely by closing one clutch and opening the in each case other clutch, comprising the following steps:

- preloading the selected gear in the direction of disengagement,
- closing the clutch associated with the new gear to be selected in a ramped fashion, and
- disengaging the previously selected gear when the clutch associated with the previously selected gear is at least substantially free from torque, **characterized in that** the disengagement of the previously selected gear is detected if the magnitude of the following difference exceeds a predetermined value:

$$n_1 - \frac{n_2}{n_1} i_1 \, ,$$

where

$n_1$: rotational speed of the input shaft of the partial gearbox whose gear was previously selected;

$i_1$: transmission ratio of the previously selected gear;

$n_2$: rotational speed of the input shaft of the partial gearbox whose gear is being newly selected;

$i_2$: transmission ratio of the gear to be newly selected.

2. Method according to Claim 1, wherein, during a traction upshift, the torque which can be transmitted by the clutch which is closing in a ramped fashion is limited to a value which is dependent on the engine torque and on the gears engaged in the partial gearboxes.

3. Method according to either of Claims 1 and 2, wherein the torque ($T_{K2}$) of the closing clutch at the time of the disengagement of the previously selected gear is adapted to the value

$$T_{K2} = T_M - I_M \dot{\omega}_M \, ,$$

where

$T_M$ = engine torque acting on the double-clutch gearbox,

$I_M$ = moment of inertia of the engine,

$\dot{\omega}$ = rotational speed change of the engine at the time of disengagement of the previously selected gear.

4. Method according to one of Claims 1 to 3, wherein the clutch associated with the previously engaged gear is closed in a slip-free manner until the disengagement of the gear.

5. Device for controlling a double-clutch gearbox which has two partial gearboxes (22, 24), provided with in each case one clutch (K1, K2), for the selective torque-transmitting connection of a drive input shaft (10) to a drive output shaft (18), wherein gears can be engaged in the partial gearboxes when the associated clutch is open, in such a way that the transmission ratio of the double-clutch gearbox can be shifted from a gear engaged in one partial gearbox to a gear engaged in the other partial gearbox merely by closing one clutch and opening the in each case other clutch, which device comprises:

in each case one clutch actuator (26, 28) for actuating in each case one of the clutches (K1, K2),

a gear actuating device (30) with at least one gear actuator for engaging and disengaging gears,

sensors for measuring variables relevant to the operation of the actuators, and an electronic control device (32) which controls the operation of the actuators in accordance with a method according to one of Claims 1 to 4.

**Revendications**

1. Procédé de commande d'une transmission à double embrayage, qui présente deux transmissions partielles (22, 24) pourvues chacune d'un embrayage (k1, K2), pour la connexion sélective par transmission de couple d'un arbre d'entraînement (10) à un arbre de sortie (18), des rapports pouvant être enclenchés dans les transmissions partielles lorsque l'embrayage associé est ouvert, de sorte que la multiplication de la transmission à double embrayage puisse seulement être commutée par fermeture de l'un des embrayages et ouverture de l'autre embrayage respectif d'un rapport enclenché dans l'une des transmissions partielles à un rapport enclenché dans l'autre transmission partielle, comprenant les étapes consistant à :

- précontraindre le rapport enclenché dans la direction d'une sortie,
- fermer, par une fermeture en forme de rampe, l'embrayage associé au nouveau rapport à enclencher, et

- déconnecter le rapport préalablement enclenché en cas d'absence au moins principale de couple de l'embrayage associé au rapport préalablement enclenché, **caractérisé en ce que** la sortie du rapport préalablement enclenché est détectée par le fait que la valeur absolue de la différence suivante dépasse une valeur prédéterminée :

$$n_1 - \frac{n_2}{i_2} i_1,$$

$n_1$ étant la vitesse de rotation de l'arbre d'entraînement de la transmission partielle dont le rapport avait été préalablement enclenché ;
$i_1$ étant la multiplication du rapport préalablement enclenché ;
$n_2$ étant la vitesse de rotation de l'arbre d'entrée de la transmission partielle dont le rapport est nouvellement enclenché ; et
$i_2$ étant la multiplication du nouveau rapport à enclencher.

2.  Procédé selon la revendication 1, dans lequel le couple pouvant être transmis par l'embrayage se fermant en forme de rampe, dans le cas d'un passage en traction à la vitesse supérieure, est limité à une valeur dépendant du couple moteur et des rapports enclenchés dans les transmissions partielles.

3.  Procédé selon l'une quelconque des revendications 1 et 2, dans lequel le couple ($T_{K2}$) de l'embrayage se fermant à l'instant de la déconnexion du rapport préalablement enclenché est adapté à la valeur

$$T_{K2} = T_M - I_M \omega_M$$

$T_M$ étant le couple moteur agissant sur la transmission à double embrayage,
$I_M$ étant le couple d'inertie du moteur, et
$\omega$ étant la variation de régime du moteur à l'instant de la déconnexion du rapport préalablement enclenché.

4.  Procédé selon l'une quelconque des revendications 1 à 3, dans lequel l'embrayage associé au rapport préalablement enclenché est fermé sans glissement jusqu'à la déconnexion du rapport.

5.  Dispositif pour commander une transmission à double embrayage, qui présente deux transmissions partielles (22, 24) pourvues chacune d'un embrayage (K1, K2), pour la connexion sélective par transmission de couple d'un arbre d'entraînement (10) à un arbre de sortie (18), des rapports pouvant être enclenchés dans les transmissions partielles lorsque l'embrayage associé est ouvert, de sorte que la multiplication de la transmission à double embrayage puisse seulement être commutée par fermeture de l'un des embrayages et ouverture de l'autre embrayage respectif d'un rapport enclenché dans l'une des transmissions partielles à un rapport enclenché dans l'autre transmission partielle, ledit dispositif comprenant :

    un actionneur d'embrayage respectif (26, 28) pour l'actionnement de chacun des embrayages (K1, K2),
    un dispositif d'actionnement de rapport (30) avec au moins un actionneur de rapport pour l'enclenchement et la déconnexion de rapports,
    des capteurs pour détecter des valeurs pertinentes pour le fonctionnement des actionneurs, et un dispositif de commande électronique (32) qui commande le fonctionnement des actionneurs en fonction d'un procédé selon l'une quelconque des revendications 1 à 4.

# Fig. 1

# Fig. 2

## Fig. 3

## Fig. 4

# Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1122116 A2